# DEMANDE DE BREVET EUROPEEN

(11) **EP 3 093 133 A1**
(43) Date de publication de la demande: **16.11.2016**
(21) Numéro de dépôt: 15305727.8
(22) Date de dépôt: 13.05.2015
(51) Int. Cl.: B30B 15/28, F16F 9/02

(54) **DISPOSITIF DE RESSORT À GAZ SÉCURISÉ ET UTILISATION D'UN TEL DISPOSITIF DANS UNE PRESSE D'EMBOUTISSAGE**

(71) Demandeur: Société des Usines QUIRI & Cie, S.A., 67300 Schiltigheim (FR)
(72) Inventeur: Feisthauer, Francis, 67000 STRASBOURG (FR)
(74) Mandataire: Nuss, Laurent

(57) **Abrégé**

La présente invention a pour objet un dispositif de ressort à gaz sécurisé comprenant un corps de cylindre (1) présentant une paroi latérale (1a) et un fond (1b) et renfermant une chambre de compression (4), une bague de guidage (2), une tige (3) guidée dans cette dernière et un joint d'étanchéité statique (5) interposé entre lesdites bague et paroi latérale.

Il comprend en outre au moins un élément de cisaillement ou de rupture (6) dépassant de la paroi latérale dans ladite chambre et au moins un élément de butée (7a) s'étendant à l'extérieur en étant solidaire de la bague ou de la tige et étant prévu pour pouvoir générer, lors d'une surcourse accidentelle, un déplacement en force de la bague de guidage vers le fond entraînant ledit joint contre ledit élément de cisaillement ou de rupture. Elle a également pour objet une utilisation d'un tel dispositif dans une presse d'emboutissage.

## Description

La présente invention concerne le domaine des ressorts utilisant un fluide compressible et notamment de tels ressorts destinés à être utilisés dans des presses d'emboutissage et a pour objet un dispositif de ressort à gaz sécurisé et une utilisation d'un tel dispositif dans une presse d'emboutissage.

On connaît déjà dans l'industrie des ressorts à gaz se présentant sous la forme de vérins autonomes contenant un gaz sous pression tel que de l'azote et qui sont plus particulièrement utilisés pour des travaux répétitifs d'emboutissage.

Un tel ressort à gaz est généralement constitué d'un corps de cylindre renfermant une chambre de compression remplie d'un gaz sous pression dans laquelle se déplace de manière linéaire une tige guidée en coulissement au moyen d'une bague de guidage fermant, avec la tige et avec une étanchéité, l'extrémité amont dudit corps de cylindre traversée par ladite tige et correspondant à l'entrée du corps de cylindre. L'extrémité aval du corps de cylindre de cylindre étant fermée par un fond. La bague de guidage présente une forme cylindrique s'étendant longitudinalement entre une extrémité amont la plus éloignée du fond et une extrémité aval la plus proche du fond. En outre, la tige est généralement terminée par une collerette faisant office de butée contre l'une des extrémités de la bague de guidage pour limiter les mouvements de rappel de la tige en position sortie.

En fonctionnement, en phase de rentrée de la tige dans le corps de cylindre, le volume intérieur de la chambre de compression occupé par le gaz sous pression diminue et la pression du gaz augmente, ce qui engendre une augmentation de la poussée sur la tige.

Dans une utilisation du ressort à gaz dans une presse d'emboutissage, la tige est déplacée depuis sa position sortie vers sa position rentrée en étant poussée par une presse ou un élément mécanique actionné par la presse, puis est déplacée vers sa position sortie initiale sous l'effet de la pression du gaz, généralement de l'azote, appliquée sur la section de la tige. La pression du gaz, tel que l'azote, est généralement très élevée, de l'ordre de 15 Mpa. La collerette de la tige vient en butée contre l'extrémité inférieure (la plus proche du fond) de la bague de guidage.

D'autre part, un tel ressort à gaz comprend des joints d'étanchéité pour assurer son étanchéité, notamment au niveau de la bague de guidage, et éviter que le gaz ne s'échappe vers l'extérieur de la chambre de compression du corps de cylindre et donc à l'extérieur du ressort lui-même. Un tel ressort à gaz comprend généralement au moins deux types de joints d'étanchéité, à savoir au moins un joint d'étanchéité statique, généralement de forme annulaire, interposé entre la bague de guidage et la paroi latérale de la chambre du vérin et au moins un joint d'étanchéité dynamique, généralement de forme annulaire, interposé entre la tige et la pièce de guidage. Le joint d'étanchéité statique est interposé en étant en contact avec la face externe de la paroi latérale de la bague de guidage et la face interne de la paroi latérale du corps de cylindre.

Toutefois, en cas de surcourse accidentelle de la tige, dans sa phase de rentrée, c'est à dire en cas de course de la tige allant au-delà d'une garde de quelques millimètres par rapport à une course nominale à 100%, par exemple dans une utilisation dans une presse d'emboutissage lorsque la presse exécute une course supérieure à la course prévue, il arrive que la collerette de la tige vienne heurter ou percuter le fond de la chambre de compression et se brise ou casse, ce qui a pour effet que la collerette n'assure plus sa fonction de retenue de la tige contre la bague de guidage et que la tige, sous la poussée du gaz, est alors projetée violemment hors du ressort. La tige ainsi éjectée présente un danger important pour l'utilisateur qui peut subir des dommages corporels plus ou moins graves. L'éjection de la tige peut également créer des dommages matériels environnant plus ou moins importants.

Pour remédier à cet inconvénient, il a été proposé plusieurs solutions.

L'une d'entre elles est divulguée, selon plusieurs formes de réalisation dans le document EP 0959263 qui a pour objet un dispositif à fluide compressible tel qu'un ressort à gaz comportant, d'une part, une chambre de compression et un piston (collerette), mobile dans cette chambre et, d'autre part, un organe de sécurité disposé de manière à être percuté par le piston en cas de surcourse accidentelle, c'est-à-dire de course de ce dernier supérieure d'une valeur prédéterminée à sa course nominale. L'organe de sécurité est agencé pour provoquer la purge de la chambre de compression lorsqu'il est percuté par le piston. Plus particulièrement, l'organe de sécurité forme saillie dans le fond de la chambre de compression, de préférence d'au moins 3 mm, et est solidaire d'un bouchon creux vissé dans le corps du ressort à gaz. L'organe de sécurité comporte un pion central et une portion annulaire amincie reliant ce pion au bouchon et dont la résistance mécanique de ladite portion amincie est choisie de telle sorte que cette dernière rompe lorsque le pion est percuté par le piston en cas de surcourse. Le pion est alors expulsé au travers du bouchon creux, ce qui a pour effet de vider la chambre de compression par un canal d'évacuation traversant le bouchon en communiquant avec l'extérieur et d'empêcher l'éjection accidentelle de la tige. En outre, le dévissage du bouchon permet de purger la chambre de compression.

Cependant, avec une telle solution, le bouchon est brisé ce qui nécessite de le remplacer par un autre bouchon. Un autre inconvénient est que le bouchon doit être agencé et fixé précisément dans le fond de la chambre pour être cassé efficacement lors d'une surcourse accidentelle supérieure d'une valeur prédéterminée à sa course nominale, autrement le système peut ne pas fonctionner. De plus ce dispositif comporte un joint d'étanchéité supplémentaire qui constitue également un risque de fuite.

Pour remédier à ces inconvénients le document EP 2 634 451 a pour objet un élément de contrôle constitué par un axe formant un poinçon s'étendant parallèlement à l'axe du vérin et étant disposé entre la bague de guidage et le corps du vérin de sorte à dépasser à l'extérieur du ressort à gaz du côté de l'entrée du corps de cylindre. Un tel poinçon est prévu pour être enfoncé au niveau de son extrémité au moyen du coulisseau d'une presse, lors d'une surcourse accidentelle, pour venir atteindre et endommager un joint d'étanchéité statique avec pour effet de créer une fuite de gaz vers l'extérieur rendant inefficace l'étanchéité du ressort à gaz et inopérant ce dernier. Dans une forme de réalisation différente, l'élément de contrôle consiste en un bouchon situé sur la partie supérieure du ressort à gaz, c'est-à-dire du côté de son entrée opposé à son fond, en s'étendant vers l'extérieur parallèlement à l'axe du ressort à gaz, ledit bouchon fermant un orifice créé entre la chambre de compression et l'extérieur de sorte que lors d'une surcourse accidentelle, le coulisseau de la presse vienne briser ce bouchon avec pour effet de provoquer une fuite du gaz à travers ce dernier qui comporte un canal d'évacuation du gaz communiquant avec l'extérieur. Une autre forme de l'élément de contrôle divulguée dans ce document consiste en une bague réalisée en deux parties qui coulissent l'une dans l'autre, un joint statique étant interposé entre ces deux bagues de sorte que lors d'une surcourse accidentelle il se produise un déplacement relatif des deux bagues ayant pour effet de supprimer l'étanchéité du joint statique et de provoquer une fuite du gaz empêchant l'éjection de la tige, c'est à dire maintenant cette dernière dans le ressort à gaz.

Toutefois, la solution proposée par le document EP 2 634 451, est complexe, couteuse et peu efficace. En effet, par exemple, l'écrasement du bouchon ne garanti pas la cassure de celui-ci et le fait de rajouter un joint statique entre les deux bagues accroit notablement le coût de fabrication du ressort à gaz. En outre, dans certaines circonstances, lorsque la presse vient frapper uniquement la tige, ce système est totalement inefficace. En effet, dans certaines presses, la pièce d'appui (coulisseau) présente un diamètre sensiblement identique à celui de la tige de sorte que, en cas de surcourse, la tige, en contact avec la pièce d'appui, va effectuer une surcourse, mais cette dernière, du fait de son diamètre, n'entrera pas en contact avec, et n'appuiera pas sur, le poinçon prévu pour endommager et/ou déformer le joint statique. Dans ce cas, le système ne fonctionnera pas et le ressort ne sera pas purgé et sécurisé.

La présente invention a pour but de pallier ces inconvénients en proposant un dispositif de ressort à gaz sécurisé, simple et peu coûteux ne nécessitant pas de système d'étanchéité supplémentaire et fonctionnant quelles que soient les dimensions de la tige d'appui de la presse agissant sur la tige.

A cet effet, le dispositif de ressort à gaz sécurisé, selon l'invention, comprend, d'une part, un corps de cylindre, un bague de guidage globalement cylindrique traversée axialement par un canal de guidage, une tige guidée axialement dans ce dernier entre une position rentrée et une position sortie, ledit corps de cylindre présentant une paroi latérale s'étendant le long d'un axe longitudinal entre une extrémité amont fermée par la bague de guidage et la tige et une extrémité aval fermée par un fond et renfermant une chambre de compression et, d'autre part, un joint d'étanchéité statique interposé entre la bague de guidage et la paroi latérale, ladite bague de guidage s'étendant longitudinalement entre une extrémité amont et une extrémité aval.

Un tel dispositif de ressort à gaz sécurisé se caractérise essentiellement en ce qu'il comprend en outre, d'une part, au moins un élément de cisaillement ou de rupture fixé ou intégré dans la paroi latérale en dépassant de cette dernière dans la chambre de compression de sorte à être positionné dans l'axe dudit joint d'étanchéité statique et, d'autre part, au moins un élément de butée s'étendant à l'extérieur en étant solidaire de la bague de guidage ou de la tige et étant prévu pour pouvoir générer, lors d'une contrainte de poussée exercée sur la bague de guidage par l'intermédiaire dudit élément de butée, un déplacement en force de la bague de guidage vers le fond entraînant le joint d'étanchéité contre ledit élément de cisaillement ou de rupture avec pour effet de cisailler ou rompre ce dernier et de supprimer ainsi sa fonction d'étanchéité.

La présente invention a également pour objet une utilisation d'un dispositif de ressort à gaz dans une presse d'emboutissage, ladite presse d'emboutissage comprenant une presse, ladite utilisation se caractérisant essentiellement en ce que ledit dispositif de ressort à gaz consiste en un dispositif de ressort à gaz tel que défini selon la présente invention et en ce que la presse est prévue pour pouvoir actionner la tige et exercer, lors de l'actionnement de cette dernière avec une surcourse accidentelle, la contrainte de poussée sur la bague de guidage par l'intermédiaire de l'élément de butée soit en venant directement en butée contre l'élément de butée solidaire de la bague de guidage, soit en déplaçant indirectement l'élément de butée solidaire de la tige pour l'amener en butée contre l'extrémité amont de la bague de guidage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

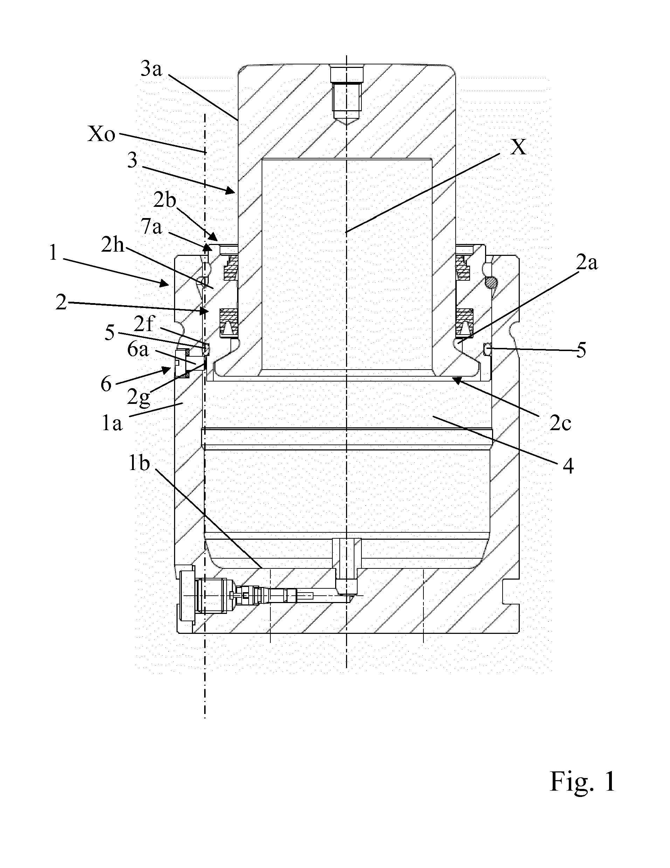

- la figure 1 montre une vue en coupe longitudinale d'un dispositif de ressort à gaz sécurisé selon l'invention, dans une orientation de fonctionnement verticale, à l'état de sortie de la tige, dans un premier mode de réalisation où l'élément de butée est solidaire de la bague de guidage et dans une première forme du prolongement de la bague de guidage à l'extérieur où l'élément de butée constituant ce prolongement est intégré dans cette dernière et dans une première forme de réalisation de l'élément de butée,

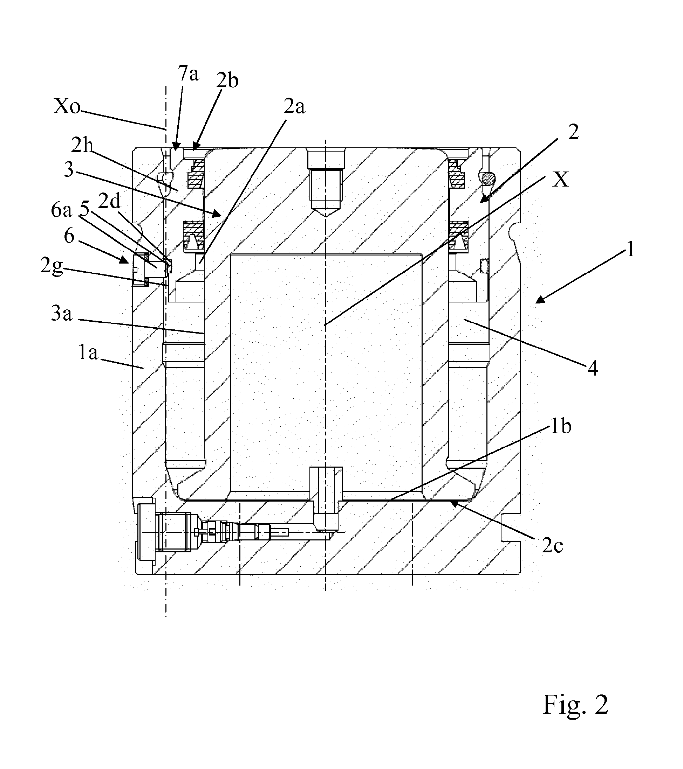

- la figure 2 montre le dispositif de ressort à gaz sécurisé représenté sur la figure 1, à l'état de cisaillement ou de rupture du joint d'étanchéité statique du à la contrainte de poussée exercée par une presse lors d'une surcourse accidentelle de la tige,

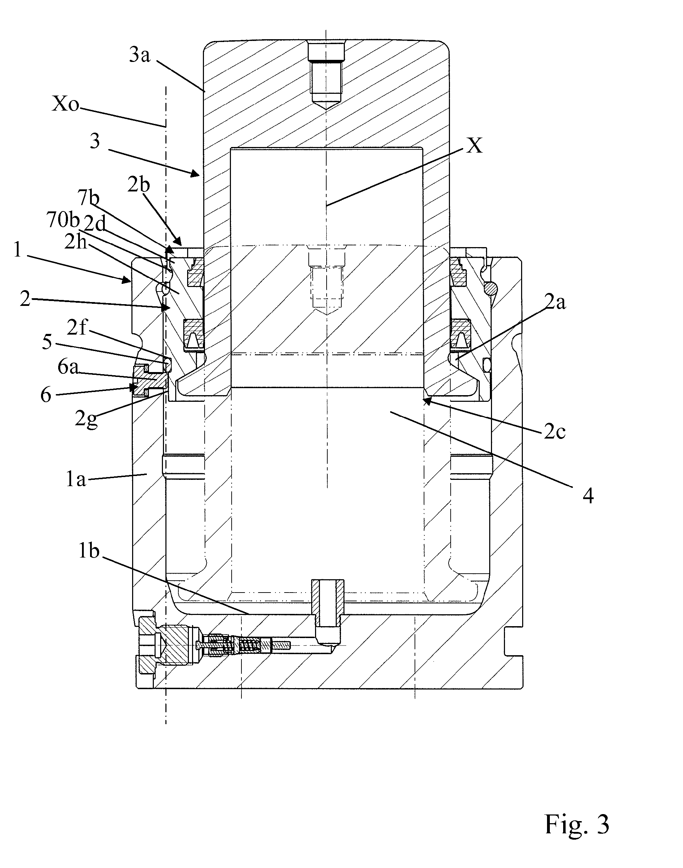

- la figure 3 montre une vue en coupe longitudinale d'un dispositif de ressort à gaz sécurisé selon l'invention, dans une orientation de fonctionnement verticale, à l'état de sortie de la tige, dans le premier mode de réalisation où l'élément de butée est solidaire de la bague de guidage et dans une deuxième forme du prolongement de la bague de guidage à l'extérieur où l'élément de butée constituant ce prolongement est rapporté sur cette dernière et dans une deuxième forme de réalisation de l'élément de butée,

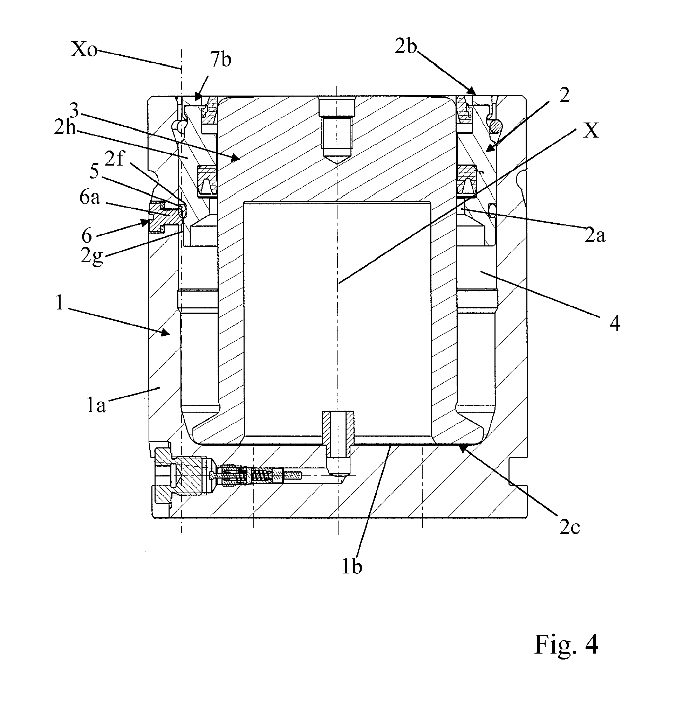

- la figure 4 montre le dispositif de ressort à gaz sécurisé représenté sur la figure 3, à l'état de cisaillement ou de rupture du joint d'étanchéité statique du à la contrainte de poussée exercée par une presse lors d'une surcourse accidentelle de la tige,

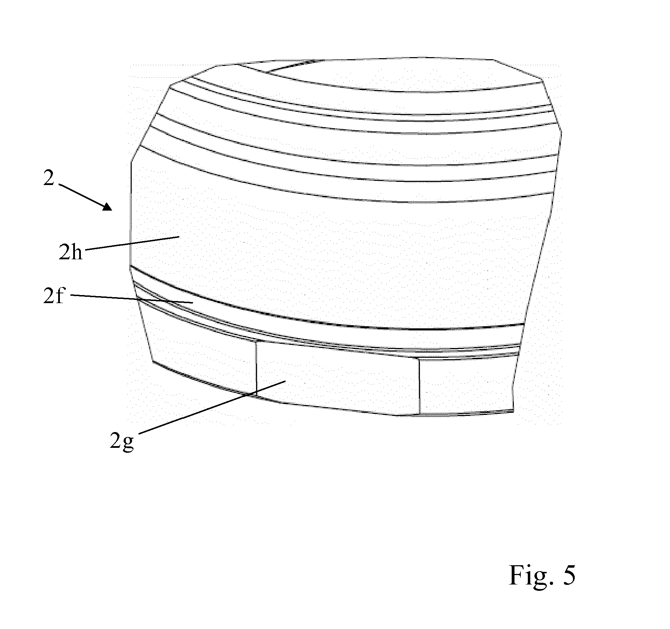

- la figure 5 montre une vue partielle en perspective de la partie de la bague de guidage comprenant la gorge de réception du joint d'étanchéité statique et l'espace de passage permettant, lors du déplacement forcé vers le fond de la bague de guidage, le passage de la partie de l'élément de cisaillement et de rupture dépassant dans la chambre de compression,

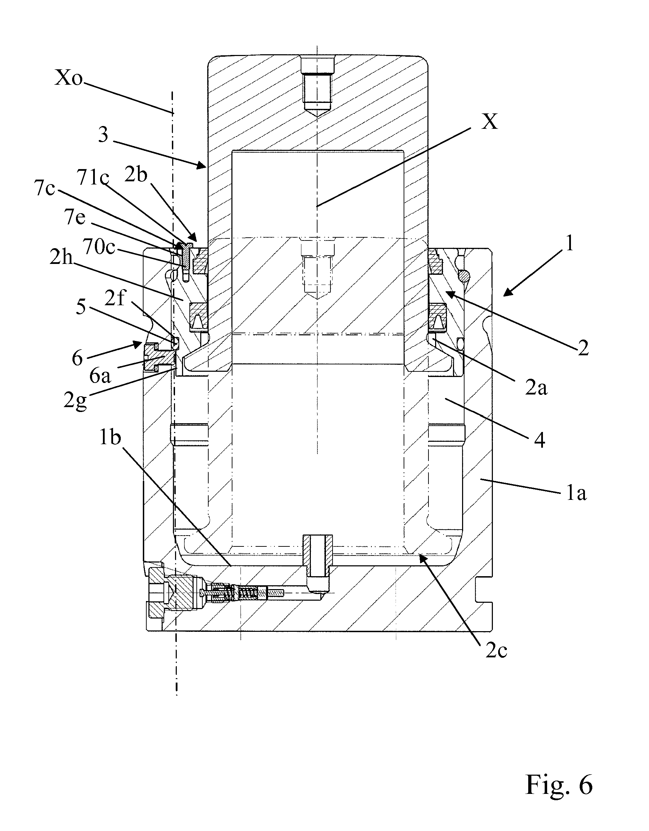

- la figure 6 montre le dispositif de ressort à gaz sécurisé selon l'invention, dans une orientation de fonctionnement verticale, à l'état de sortie de la tige, dans le premier mode de réalisation où l'élément de butée est solidaire de la bague de guidage et dans la deuxième forme du prolongement de la bague de guidage à l'extérieur où l'élément de butée constituant ce prolongement est rapporté dans cette dernière et dans une dans une troisième forme de réalisation de l'élément de butée,

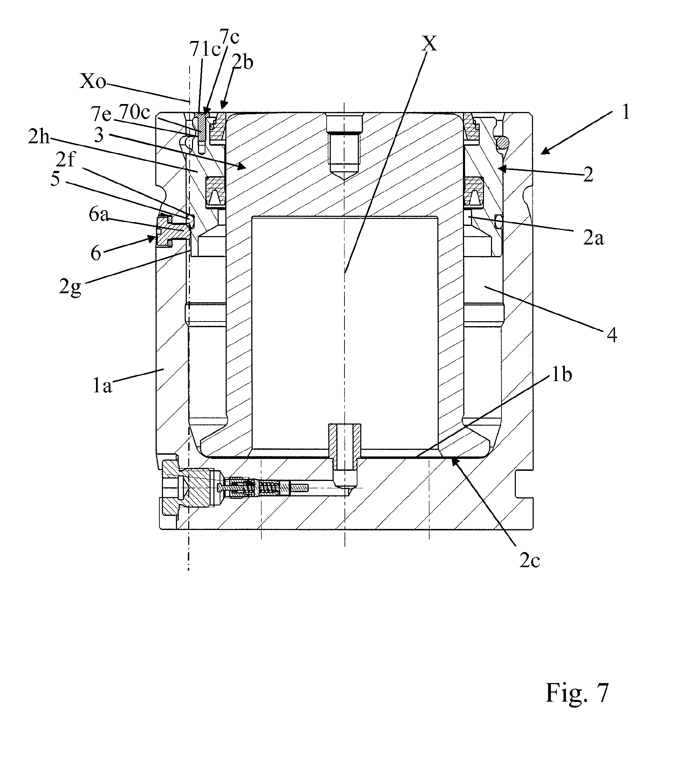

- la figure 7 montre le dispositif de ressort à gaz sécurisé représenté sur la figure 6, à l'état de cisaillement ou de rupture du joint d'étanchéité statique du à la contrainte de poussée exercée par une presse lors d'une surcourse accidentelle de la tige,

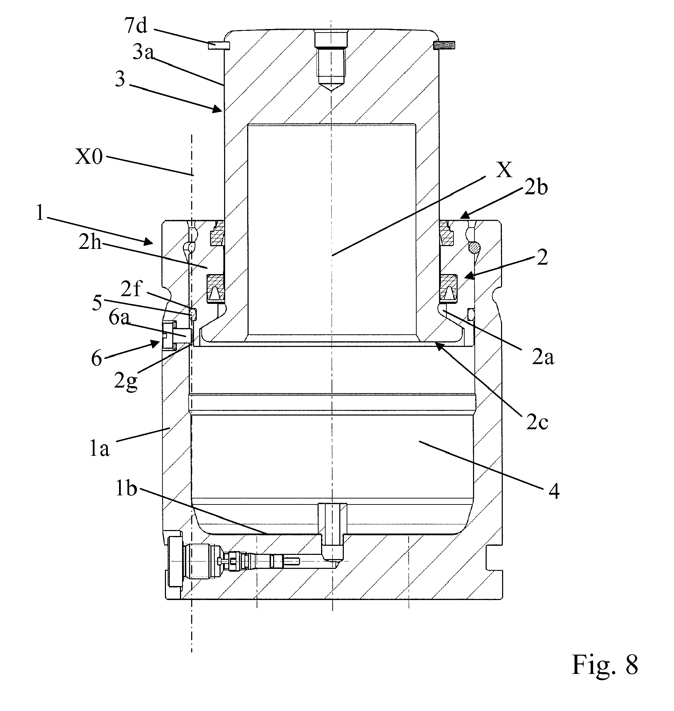

- la figure 8 montre le dispositif de ressort à gaz sécurisé selon l'invention, dans une orientation de fonctionnement verticale, à l'état de sortie de la tige, dans un deuxième mode de réalisation où l'élément de butée est solidaire de la tige en étant rapporté sur cette dernière et dans une quatrième forme de réalisation de l'élément de l'élément de butée,

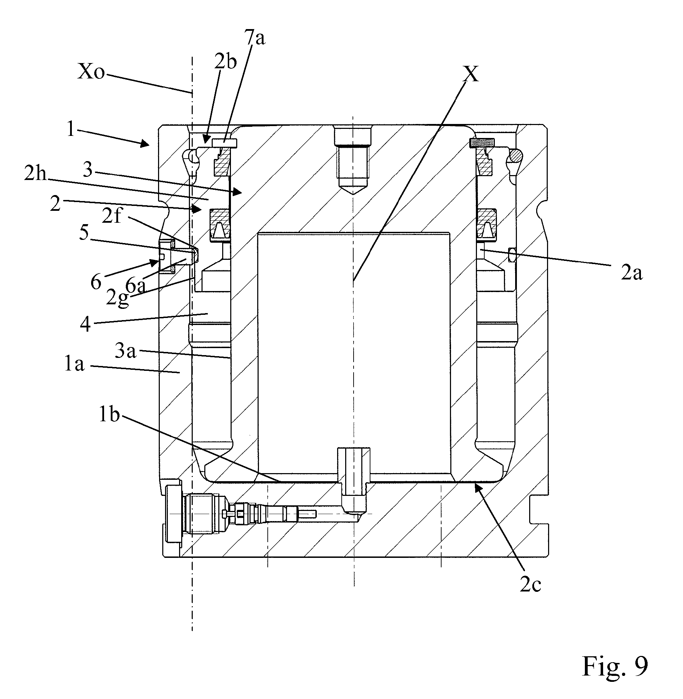

- la figure 9 montre le dispositif de ressort à gaz sécurisé représenté sur la figure 8, à l'état de cisaillement ou de rupture du joint d'étanchéité statique du à la contrainte de poussée exercée par une presse lors d'une surcourse accidentelle de la tige.

Les figures montrent un dispositif de ressort à gaz sécurisé, selon l'invention, comprenant, d'une part, un corps de cylindre 1, un bague de guidage 2 globalement cylindrique traversée axialement par un canal de guidage 2a, une tige 3 guidée axialement dans ce dernier entre une position rentrée et une position sortie, ledit corps de cylindre présentant une paroi latérale la s'étendant le long d'un axe longitudinal X entre une extrémité amont fermée par la bague de guidage 2 et la tige 3 et une extrémité aval fermée par un fond 1b et renfermant une chambre de compression 4 et, d'autre part, un joint d'étanchéité statique 5 interposé entre la bague de guidage 2 et la paroi latérale 1a, ladite bague de guidage s'étendant longitudinalement entre une extrémité amont 2b et une extrémité aval 2c.

On comprendra que la chambre de compression 4 est remplie d'un fluide, tel qu'un gaz, sous pression, non représenté, et que l'extrémité amont 2b de la bague de guidage 2 correspond à son extrémité la plus éloignée du fond 1b du corps de cylindre 1, tandis que l'extrémité aval correspond à son extrémité opposée la plus proche du fond 1b.

Conformément à l'invention, un tel dispositif de ressort à gaz se caractérise essentiellement en ce qu'il comprend en outre, d'une part, au moins un élément de cisaillement ou de rupture 6 fixé ou intégré dans la paroi latérale 1a en dépassant de cette dernière dans la chambre de compression 4 et de sorte à être positionné dans l'axe du joint d'étanchéité statique 5, c'est-à-dire en dépassant dans la chambre de compression 4 de sorte à être positionné en coupant, en aval du joint d'étanchéité statique 5, un axe fictif de cisaillement ou de rupture X0 parallèle à l'axe longitudinal X et passant par le joint d'étanchéité statique 5 et, d'autre part, au moins un élément de butée 7a ; 7b ; 7c ; 7d s'étendant à l'extérieur en étant solidaire de la bague de guidage 2 ou de la tige 3 et étant prévu pour pouvoir générer, en cas de surcourse accidentelle, lors d'une contrainte de poussée s'exerçant sur la bague de guidage 2 par l'intermédiaire dudit élément de butée, un déplacement en force de la bague de guidage 2 vers le fond 1b entraînant le joint d'étanchéité 5 contre ledit élément de cisaillement ou de rupture avec pour effet de cisailler ou rompre ce dernier et de supprimer ainsi sa fonction d'étanchéité.

Le cisaillement ou la rupture du joint d'étanchéité statique 5 par son contact forcé avec l'élément de cisaillement ou de rupture 7a ; 7b ; 7c ; 7d qui entraîne la suppression de sa fonction d'étanchéité a donc pour résultat de créer instantanément une fuite du fluide contenu dans la chambre de compression 4 à l'extérieur et une diminution instantanée de la pression dans cette dernière empêchant l'éjection de la tige et sécurisant le dispositif de ressort à gaz.

Dans un premier mode de réalisation de la solidarisation de l'élément de butée 7a, celui-ci est solidaire de la bague de guidage 2 et peut constituer un prolongement à l'extérieur de la bague de guidage 2. Dans une première forme du prolongement, l'élément de butée 7a peut être intégré dans la bague de guidage 2 en venant de moulage ou d'usinage avec cette dernière (figures 1 et 2). Dans une deuxième forme du prolongement, l'élément de butée 7b; 7c peut être rapporté sur la bague de guidage 2 en étant fixé solidement sur celle-ci grâce à des moyens de fixation 2d, 70b; 2e, 70c (figures 3, 4, 6, 7).

Dans cette forme de solidarisation où l'élément de butée 7a est intégré dans la bague de guidage 2, celui-ci peut consister, dans une première forme de réalisation, en une saillie annulaire à la surface de l'extrémité amont 2b de la bague de guidage 2 (figures 1 et 2). La saillie annulaire vient de moulage ou d'usinage avec la bague d'étanchéité 2. De préférence, comme on peut le voir également sur ces figures 1 et 2, la saillie annulaire peut être coaxiale à l'axe de la bague de guidage 2.

Comme on peut le voir sur les figures 3 et 4, dans la deuxième forme du prolongement où l'élément de butée 7b est rapporté sur la bague de guidage 2, l'extrémité amont 2b de cette dernière comprenant un bord d'accrochage ou un bourrelet d'accrochage 2d pouvant s'étendre latéralement. En outre, l'élément de butée 7b peut consister, dans une deuxième forme de réalisation, en une pièce annulaire pouvant être fixée, de préférence par sertissage de sa matière 70b, sur le bord ou le bourrelet d'accrochage 2d.

D'autre part, comme on peut le voir sur les figures 6 et 7, toujours dans la deuxième forme du prolongement où l'élément de butée 7c est rapporté sur la bague de guidage 2, un taraudage 2e peut être pratiqué dans l'extrémité amont 2b de la bague de guidage 2 selon un axe sensiblement parallèle à l'axe de cette dernière ou à l'axe longitudinal X. En outre, l'élément de butée 7c peut consister, dans une troisième forme de réalisation (figures 6 et 7), en une vis qui peut être vissée, grâce à sa tige filetée 70c, dans le taraudage 2e de sorte qu'une partie élargie de la vis 7c, telle qu'une tête de vis 71c, soit située à l'extérieur du corps de cylindre 1 en venant en appui contre l'extrémité amont de la bague de guidage 2. L'axe de la vis peut ainsi être sensiblement parallèle à l'axe de la bague de guidage 2 ou à l'axe longitudinal X et la tête de vis 71 c peut ainsi former une butée externe.

Si on se réfère maintenant aux figures 8 et 9, on peut voir que, dans un deuxième mode de réalisation de la solidarisation, l'élément de butée 7d peut être solidaire de la tige 3 et peut être rapporté fixement sur la tige 3 en formant une extension latérale de cette dernière située dans l'axe de la bague de guidage 2, c'est-à-dire que l'élément de butée 7d formé par l'extension latérale est prévu en cas de surcourse accidentelle de la tige 3 pour venir en butée contre l'extrémité amont 2b de la bague de guidage 2. De préférence, l'élément de butée 7d peut consister, dans une quatrième forme de réalisation, en un élément annulaire, tel qu'une rondelle, entourant la partie latérale de la tige 3 coaxialement à cette dernière. L'élément de butée 7d peut être positionnée axialement sur la tige 3, de préférence, à proximité de son extrémité amont afin de permettre la course normale de la tige 3, tout en étant positionné pour venir, lors d'une surcourse accidentelle, au contact l'extrémité amont 2b de la bague de guidage 2 en exerçant la contrainte de poussée sur celle-ci. Un tel élément annulaire 7d peut être fixé dans une gorge annulaire 3b pratiquée dans la face externe de la partie latérale 3a de la tige 3, de préférence à proximité de son extrémité amont.

Si on se réfère aux figures 1, 2, 3, 4, 6, 7, 8 et 9 et plus particulièrement à la figure 5, on peut voir que la bague de guidage 2 présente une face latérale externe dans laquelle est pratiquée, d'une part, une gorge de réception 2f qui peut être prévue pour recevoir le joint d'étanchéité statique 5 pouvant dépasser en partie de cette dernière pour venir en appui d'étanchéité contre la paroi latérale la du corps de cylindre 1, c'est-à-dire contre la face interne de la paroi latérale de ce dernier, et, d'autre part, en aval de la gorge de réception 2d, au moins un évidemment, une encoche, une rainure ou un méplat 2g. Un(e) tel(le) évidement, encoche, rainure ou méplat 2g peut déboucher dans la gorge de réception 2d et peut former un passage de cisaillement ou de rupture adapté pour recevoir et laisser passer la partie de l'élément de cisaillement ou de rupture 6 dépassant dans la chambre de compression 4 de sorte à permettre au joint d'étanchéité statique 5 de venir, lors du déplacement forcé de la bague de guidage 2 vers le fond 1b en cas de surcourse accidentelle de la tige 3, contre ladite partie de l'élément de cisaillement ou de rupture 6.

Le joint d'étanchéité statique 5 peut être réalisé de préférence à partir d'un matériau, tel qu'un caoutchouc, adapté pour être cisaillé instantanément lors de son contact avec l'élément de cisaillement ou de rupture 6.

Dans une forme de réalisation préférentielle, l'élément de cisaillement ou de rupture peut s'étendre dans la chambre de compression 4 le long d'un axe sensiblement perpendiculaire à l'axe de la bague de guidage 2 ou à l'axe longitudinal X du corps de cylindre 1. En outre, de préférence, l'élément de cisaillement ou de rupture 6 peut consister en une vis ou autre élément similaire comprenant une tige ou un axe 6a pouvant former la partie de l'élément de cisaillement ou de rupture dépassant ou s'étendant dans la chambre de compression 4 (figures 1, 2, 3, 4, 6, 7, 8, 9).

La présente invention a également pour objet une utilisation d'un dispositif de ressort à gaz dans une presse d'emboutissage, ladite presse d'emboutissage comprenant une presse 8.

Dans une telle utilisation selon l'invention, le dispositif de ressort à gaz consiste en un dispositif de ressort à gaz tel que défini selon l'invention et la presse 8 est prévue pour pouvoir actionner la tige 3 et exercer, lors de l'actionnement de cette dernière avec une surcourse accidentelle, la contrainte de poussée sur la bague de guidage 2 par l'intermédiaire de l'élément de butée 7a ; 7b ; 7c ; 7d soit en venant directement en butée contre l'élément de butée 7a, 7b, 7c, par exemple tel que défini dans le premier mode de réalisation de sa solidarisation, solidaire de la bague de guidage 2 (figures 2, 4, 7), soit en déplaçant indirectement l'élément de butée 7d, par exemple tel que défini selon le deuxième mode de réalisation de la solidarisation, solidaire de la tige 3 pour l'amener en butée contre l'extrémité amont 2b de la bague de guidage 2 (figure 9).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de ressort à gaz sécurisé comprenant, d'une part, un corps de cylindre (1), un bague de guidage (2) globalement cylindrique traversée axialement par un canal de guidage (2a), une tige (3) guidée axialement dans ce dernier entre une position rentrée et une position sortie, ledit corps de cylindre présentant une paroi latérale (1a) s'étendant le long d'un axe longitudinal (X) entre une extrémité amont fermée par la bague de guidage (2) et la tige (3) et une extrémité aval fermée par un fond (1b) et renfermant une chambre de compression (4) et, d'autre part, un joint d'étanchéité statique (5) interposé entre la bague de guidage (2) et la paroi latérale (1a), ladite bague de guidage s'étendant longitudinalement entre une extrémité amont (2b) et une extrémité aval (2c), **caractérisé en ce qu'**il comprend en outre, d'une part, au moins un élément de cisaillement ou de rupture (6) fixé ou intégré dans la paroi latérale (1a) en dépassant de cette dernière dans la chambre de compression (4) de sorte à être positionné dans l'axe dudit joint d'étanchéité statique (5) et, d'autre part, au moins un élément de butée (7a ; 7b ; 7c ; 7d) s'étendant à l'extérieur en étant solidaire de la bague de guidage (2) ou de la tige (3) et étant prévu pour pouvoir générer, lors d'une contrainte de poussée exercée sur la bague de guidage (2) par l'intermédiaire dudit élément de butée, un déplacement en force de la bague de guidage (2) vers le fond (1b) entraînant le joint d'étanchéité (5) contre ledit élément de cisaillement ou de rupture avec pour effet de cisailler ou rompre ce dernier et de supprimer ainsi sa fonction d'étanchéité.

2. Dispositif de ressort à gaz, selon la revendication 1, **caractérisé en ce que** l'élément de butée (7a) est solidaire de la bague de guidage (2) et constitue un prolongement à l'extérieur de cette dernière et **en ce que** l'élément de butée (7a) est soit intégré dans la bague de guidage (2) en venant de moulage ou d'usinage avec cette dernière, soit rapporté sur la bague de guidage (2) en étant fixé solidement sur celle-ci grâce à des moyens de fixation (2d, 70b; 2e, 70c).

3. Dispositif de ressort à gaz, selon la revendication 2, **caractérisé en ce que** l'élément de butée (7a) est intégré dans la bague de guidage (2) et consiste en une saillie annulaire à la surface de l'extrémité amont (2b) de la bague de guidage (2), de préférence coaxiale à l'axe de la bague de guidage (2).

4. Dispositif de ressort à gaz, selon la revendication 2, **caractérisé en ce que** l'élément de butée (7b ; 7c) est rapporté sur la bague de guidage (2), l'extrémité amont (2b) de cette dernière comprenant un bord d'accrochage ou un bourrelet d'accrochage (2d) s'étendant latéralement et **en ce que** l'élément de butée (7b) consiste en une pièce annulaire (7) fixée, de préférence par sertissage de sa matière (70b), sur le bord ou le bourrelet d'accrochage (2d).

5. Dispositif de ressort à gaz, selon la revendication 2, **caractérisé en ce que** l'élément de butée (7b ; 7c) est rapporté sur la bague de guidage (2), **en ce qu'**il comprend un taraudage (2e) pratiqué dans l'extrémité amont (2b) de la bague de guidage (2) selon un axe sensiblement parallèle à l'axe de cette dernière ou de l'axe longitudinal (X) et **en ce que** l'élément de butée (7c) consiste en une vis qui est vissée, grâce à sa tige filetée (70c), dans le taraudage (2e) de sorte qu'une partie élargie de la vis, telle qu'une tête de vis (71c), soit située à l'extérieur du corps de cylindre (1) en venant en appui contre l'extrémité amont (2b) de la bague de guidage (2).

6. Dispositif de ressort à gaz, selon la revendication 1, **caractérisé en ce que** l'élément de butée (7d) est solidaire de la tige (3) et est rapporté fixement sur la tige (3) en formant une extension latérale de cette dernière située dans l'axe de la bague de guidage (2).

7. Dispositif de ressort à gaz, selon la revendication 6, **caractérisé en ce que** l'élément de butée (7d) consiste en un élément annulaire, tel qu'une rondelle, entourant la partie latérale (3a) de la tige (3) coaxialement à cette dernière.

8. Dispositif de ressort à gaz, selon l'une quelconque des revendications 1 à 7, **caractérisé en ce que** la bague de guidage (2) présente une face latérale externe dans laquelle est pratiquée, d'une part, une gorge de réception (2f) recevant le joint d'étanchéité statique (5) qui dépasse en partie de cette dernière pour venir en appui d'étanchéité contre la paroi latérale (1a) du corps de cylindre (1) et, d'autre part, en aval de la gorge de réception (2d), au moins un évidemment, une encoche ou une rainure (2g) débouchant dans la gorge de réception (2d) et formant un passage de cisaillement ou de rupture adapté pour recevoir et laisser passer la partie de l'élément de cisaillement ou de rupture (6) dépassant dans la chambre de compression (4) de sorte à permettre au joint d'étanchéité statique (5) de venir, lors du déplacement forcé de la bague de guidage vers le fond (1b) en cas de surcourse accidentelle, contre ladite partie de l'élément de cisaillement ou de rupture (6a).

9. Dispositif de ressort à gaz, selon l'une quelconque des revendications 1 à 8, **caractérisée en ce que** le joint d'étanchéité statique (5) est réalisé à partir d'un matériau, tel qu'un caoutchouc, adapté pour être cisaillé instantanément lors de son contact avec l'élément de cisaillement ou de rupture (6).

10. Dispositif de ressort à gaz, selon l'une quelconque des revendications 1 à 9, **caractérisé en ce que** l'élément de cisaillement ou de rupture (6) s'étend dans la chambre de compression (4) le long d'un axe sensiblement perpendiculaire à l'axe de la bague de guidage (2) ou à l'axe longitudinal (X) du corps de cylindre (1).

11. Dispositif de ressort à gaz, selon la revendication 10, **caractérisé en ce que** l'élément de cisaillement ou de rupture (6) consiste en une vis ou autre élément similaire comprenant une tige ou un axe (6a) formant la partie de l'élément de cisaillement ou de rupture dépassant ou s'étendant dans la chambre de compression (4).

12. Utilisation d'un dispositif de ressort à gaz dans une presse d'emboutissage, ladite presse d'emboutissage comprenant une presse (8), **caractérisée en ce que** ledit dispositif de ressort à gaz consiste en un dispositif de ressort à gaz tel que défini dans les revendications 1 à 11 et **en ce que** la presse la presse (8) est prévue pour pouvoir actionner la tige (3) et exercer, lors de l'actionnement de cette dernière avec une surcourse accidentelle, la contrainte de poussée sur la bague de guidage (2) par l'intermédiaire de l'élément de butée (7a ; 7b ; 7c ; 7d) soit en venant directement en butée contre l'élément de butée (7a, 7b, 7c), par exemple tel que défini selon l'une quelconque des revendications 2 à 5, solidaire de la bague de guidage (2), soit en déplaçant indirectement l'élément de butée (7d), par exemple tel que défini selon l'une quelconque des revendication 6 à 7, solidaire de la tige (3) pour l'amener en butée contre l'extrémité amont 2b de la bague de guidage (2).
